# EUROPEAN PATENT APPLICATION

(11) **EP 4 574 766 A1**
(43) Date of publication of application: **25.06.2025**
(21) Application number: 23219658.4
(22) Date of filing: 22.12.2023
(51) Int. Cl.: C01D 7/12, C01D 7/18, C01F 11/06, C10L 5/02, C10L 5/10, C10L 5/36, C10L 5/44

(54) **PROCESS FOR PRODUCING SODIUM CARBONATE**

(71) Applicant: Solvay SA, 1120 Brussels (BE)
(72) Inventor: GLOEDE, Matthias, 47495 Rheinberg (DE); GALASCO, Alberto, 20021 Bollate (IT); FAUVET, Rémy, 54110 Dombasle (FR); CAVALIER, Karine, 1120 Brussels (BE); NETO, Jérémy, 54110 Dombasle (FR)
(74) Representative: Kraus & Lederer PartGmbB

(57) **Abstract**

A method for the manufacture of sodium carbonate or sodium bicarbonate, wherein said method comprises a limestone calcining step in a limekiln to produce lime (CaO) and a gas comprising carbon dioxide (CO₂), using limestone and a carbonaceous combustible, wherein the said carbonaceous combustible comprises biochar, and the biochar comprises at most 50 % by weight of volatile matter on a dry base.

## Description

### Technical field

The invention relates to an improved process for producing sodium carbonate or sodium bicarbonate,
wherein said method comprises a limestone calcining step in a limekiln, to produce lime (CaO) and a limekiln gas comprising carbon dioxide (CO₂), using a limestone and a carbonaceous combustible comprising biochar and
wherein the biochar comprises a limited amount of volatile matter. The invention pertains more particularly to a production process featuring reduced emission of carbon dioxide (CO₂) from fossil fuel(s) such as natural gas, oil or coal, for producing sodium carbonate, or for producing refined bicarbonate.

In the present specification, a process for producing sodium carbonate with ammonia, also referred to as the Solvay ammonia process, means a process utilizing sodium chloride (NaCl), ammonia (NH₃) and carbon dioxide (CO₂) for the production of sodium bicarbonate (ammoniacal crude sodium bicarbonate) according to the following reactions:

NaCl + H₂O + NH₃ ↔ NaCl + NH₄OH (1)

NaCl + NH₄OH + CO₂ ↔ NaHCO₃(solid) + H₂O + NH₄Cl (2)

The sodium bicarbonate (ammoniacal crude sodium bicarbonate) may be subsequently calcined to give sodium carbonate (light soda ash) according to the following reaction:

2 NaHCO₃(solid) → Na₂CO₃(solid) + H₂O(gas) + CO₂(gas) (3)

In a first variant of the Solvay process, the ammonium chloride (NH₄Cl) is regenerated to gaseous ammonia by reaction with an alkali, generally lime or caustic soda, followed by distillation. For example, with hydrated lime (Ca(OH)₂), according to the following reaction:

2 NH₄Cl + Ca(OH)₂ → CaCl₂ + 2 NH₃ + 2 H₂O (5)

and the ammonia (gaseous) is recovered, generally by distillation.

The lime is generally produced by calcining limestone with coke, to produce lime also named 'quicklime' (CaO), according to the following reaction:

CaCO₃ → CaO + CO₂(gas) (6)

and the quicklime is then hydrated in the form of milk of lime to produce calcium hydroxide (Ca(OH)₂). The gas comprising CO₂ produced on above step (6), exiting the limekiln equipment is called hereafter the `limekiln gas' and is used in step (2) described supra.

In a second variant of the process, generally referred as the Solvay ammonia 'dual' process, when there is a preference for producing ammonium chloride in the form of a finished product as a by-product of the sodium carbonate or bicarbonate, the ammonium chloride is crystallized in a fourth step (4) by addition of solid sodium chloride and by cooling; in this way, ammonium chloride is precipitated, and can be used, for example, as a fertilizer. This second variant is accompanied by a net consumption of ammonia, according to the molar amount of ammonia extracted from the process which is not regenerated and not recycled. This variant of the Solvay process with ammonia is generally referred to as the dual process or Hou process.

The present invention may be applied to either of the two variants, according to the basic reactions described above.

In one or the other variant, the production of "refined sodium bicarbonate" (" refined" in contrast to the ammoniacal crude bicarbonate) is carried out in general from sodium carbonate dissolved in aqueous solution, carbonated with a gas comprising carbon dioxide (CO₂) and the solid sodium bicarbonate is crystallized and purified according to the following reaction:

Na₂CO₃(solution) + H₂O(gas) + CO₂(gas) → 2 NaHCO₃(solid) (7)

Sodium carbonate or refined sodium bicarbonate may also be produced from sodium carbonate obtained by other processes, such as a sodium carbonate monohydrate process or a sodium sesquicarbonate process, using trona or nahcolite minerals as raw material. Said processes may also be in need of lime (CaO) or milk of lime (Ca(OH)₂) to chemically calcine part of the bicarbonate ions in aqueous solution in said processes using natural minerals.

Sodium carbonate is an essential chemical used in particular for the production of flat glass (used for instance for windows of building and houses, wherein its use has a net positive CO₂ footprint, with the heat energy it enables to provide with natural sun heating; in particular when using double shield insulated windows either in cold or hot regions. Flat glass is also used to protect photovoltaic panels from rain, ice or snow. And as such, the sodium carbonate needs are still increasing at about 2% or more, in volume per year.

Sodium bicarbonate has plenty of uses such as in the food and feed industry, in the pharmaceutical industry and services (effervescent tabs, digestive formulations, blood hemodialysis for children and adults), and in the gas treatment industry to mitigate acidic gasses such as HCl, SOx, and others.

Fossil CO₂ decarbonation of existing chemical processes is a global concern to curb down, in the 20 years to come, the global anthropogenic CO₂ and other greenhouse gases emissions, so that to stabilize and then rapidly reduce the greenhouse gasses in the Earth atmosphere generated by human beings.

Present sodium carbonate production units use fossil energy (natural gas, oil, or coal) mainly on two main sectors: steam generators and in limekilns to produce the quicklime and the CO₂ necessary for producing sodium carbonate and sodium bicarbonate:
- the steam generator sector may use alternative non-fossil energy such as nuclear energy (either in electricity form or in heat form), or decarbonized electricity such as the one from hydraulic origins, or from photovoltaic, or from wind power, or from sea streams power, or biomass;
- the limekiln sector producing lime (CaO) and carbon dioxide (CO₂) out of limestone (CaCO₃), need energy to calcine limestone (CaCO₃) into lime (CaO) and CO₂ at high temperature typically from 900° to 1250°C. Even if some equipment manufacturers have proposed limekilns using electricity, the electrical heating resistances at 900 to 1250°C have demonstrated, in quarry type environment, poor mechanical resistance and short live duration of such equipment parts. Therefore, no acceptable technical solution exists presently for using decarbonized electricity in this usage of limestone calcination at least for equipment of large size needed in plants producing one or several hundred thousand tons per year of lime.

### Prior art

The Solvay process for producing sodium carbonate (also called soda ash) has undergone numerous developments and optimizations over 160 years, since its creation by Ernest Solvay. These developments have included in particular its energy optimization and the improved management of CO₂.

An example of the process for producing sodium carbonate according to the ammonia process, and of the production of refined bicarbonate, is described in Ullmann's Encyclopedia of Industrial Chemistry ("Sodium carbonate" chapter, 2002 edition, Wiley-VCH Verlag GmbH & Co., 24 pages, in paragraphs 1.4.1 and 1.4.2).

Limekilns in sodium carbonate plants generally use metallurgical coke as source of energy.

Theoretically, in the soda ash process, the CO₂ balance is stoichiometrically neutral. However, a CO₂ excess is needed to compensate the incomplete absorption of CO₂ in the carbonation stage, and minor losses in the treatment of the mother liquid in the distillation area. This CO₂ excess is generated by combustion of solid carbonized fuel as mentioned supra. Said solid carbonized fuels provide the energy used for limestone decomposition and is the additional source of CO₂.

The operating conditions of a limekiln fitted to soda ash production are different from those used for lime production in civil engineering or for metallurgy. This, because for soda ash production there is a need to produce a gas with the maximum concentration of carbon dioxide for its subsequent use in the process. This is done generally to the detriment of the purity of the produced lime, which will contain unburnt limestone to favor high CO₂ content in the kiln gas. Said unburnt limestone is generally recycled back in the limekiln after screening the unburnt solid, present in the coarser size fraction when sieving the produced milk of lime. To improve the particle size of limestone loaded into the limekiln, screening is carried out prior to kiln loading.

Presently, there is no use of biochar in limekilns for producing sodium carbonate or sodium bicarbonate.

Fresh biomass or wood have generally a volatile content of 75 to 80 weight % on dry matter. When dried biomass or wood is used in limekilns for the production of sodium carbonate or bicarbonate, the CO₂ content of the limekiln gas (e.g. reaction (6) supra) falls far lower than 40% in volume, on dried gas. It generally reaches 35 down to 20 vol. % of CO₂ expressed on dry gas which increases the cost of compression of said lime kilns in CO₂ absorbers, and drops sensitively the yield of CO₂ absorption in CO₂ absorbers and other equipment (e.g. reactions (2), (3), and (7) supra). This generates a release of CO₂ in the atmosphere with residual gasses, and a net loss of carbon in the process.

Presently, only fossil carbonaceous combustible are used in limekilns for producing sodium carbonate or bicarbonate and not biochar or charcoal. The most used combustible in said productions, is metallurgical coke, or hard coal when coke is insufficiently available. Present requirements of said used fossil carbonaceous combustible are less than 4% or less than 3% of volatile matter.

Higher volatiles content induces high concentration of methane (CH₄), dihydrogen (H₂) and carbon monoxide (CO) in the limekiln gas when operating them for sodium carbonate or bicarbonate manufacturing. This is the case in particular when changing the operating rate of said limekilns, as during unsteady operating conditions said inflammable gasses concentration may be multiplied by a factor 2 or 3 in the produced limekiln gas.

Such inflammable and explosive gasses have generated several severe accidents in the past. Therefore, sodium carbonate and bicarbonate manufacturers refuse to use carbonaceous combustibles having volatile higher than 3% or 4%. Typical values of volatile matter in fossil carbonaceous combustible used in limekilns for sodium carbonate and bicarbonate manufacturing is 0 to 3% (0 - 30 kg/ t combustible): see European Union - IPPC BAT Reference Document - Process BREF for Soda Ash manufacturing - March 2004 - ESAPA - Issue 3 - Table 6 page 30.

Therefore, in order to decarbonize soda ash processes from fossil carbon in limekilns, biochar could not been envisioned as biochar or charcoal have a high volatile matter. Indeed biochar and charcoal produced by carbonizing: biomass, natural wood, waste wood, pruning, branches, by-products of fruit stones (such as olive stone, peach stone, walnut shell, hazelnut shell, almond shell, etc.), wood furniture wastes, drinking or waste water treatment plant muds, have generally a volatile content much higher than fossil fuel used in limekilns for producing sodium carbonate or bicarbonate.

Raw biomass has generally a volatile matter of about 75 to 80 wt. %. And biochar produced from it has a volatile matter in general higher than 3.5 wt.% on dry mass, typically from 3.5 to 25 wt.%; and can reach up 35 wt.% or 50 wt. % of volatile matter with torrefied wood or biomass.

Moreover biochar has a combustion with air generating in the combustion gas generally more soot and secondary decomposition products, such as sulfur compounds, nitrogen compounds, phosphor compounds, pyrolitic organics, acidic organic compounds, terpens and the likes. Those secondary decomposition products are generally of dark or black colors and are detrimental when such combustion gases are used to synthetize white products such as sodium carbonate crystals or sodium bicarbonate crystals. Also, the said pyrolitic decomposition products and related organics compounds, have a tendency to polymerize and condensate with vapor on cold surfaces or when cooled down, forming bio-oil which is also of dark-brown or black color, and that are detrimental for the quality of the final products when the said combustion gases are used as CO₂ source in the synthesis of sodium carbonate or bicarbonate.

### Brief description of the invention

The inventors of present invention have surprisingly observed that when using biochar, the operating conditions as listed in item 1 infra, and in the related items, enable to limit sensitively the generation of inflammable gas such as CH₄, H₂, and CO, enable to produce a limekiln gas comprising at least 35% vol. CO₂ or higher concentration, reduces the generation of PAHs (Polycyclic Aromatic Hydrocarbons) and BTEX (such as Benzene, Toluene, Ethylbenzene, and Xylene isomers) by a factor 2 to 6, compared to fossil fuels in the produced limekiln gas.

As with volatile matter above 35 wt%, and particularly above 50 wt% when biocarbon is used:
- the obtained limekiln gas has a significant decrease of the CO₂ content on the generated limekiln gas: below 37 or even below 35 vol. % on dry gas;
- the percentage of inflammable gas such as methane (CH₄), dihydrogen (H₂), carbon monoxide (CO), released by the biochar combustible in neutral atmosphere (ie nitrogen N₂ sweeping gas) when heating it up to 900°C, reported by weight of biochar, increase significantly with values above 2 wt. % equivalent of H₂ in said atmosphere so close to hydrogen lower explosion limit of 3.5 wt% H₂ (4 vol. % H₂ equivalent) in presence of a gas with 2 vol. % of oxygen concentration which is representative of typical composition in oxygen in produced limekiln gas for sodium carbonate manufacturing. Indeed this increases security risks when said limekiln gas is handled thereafter in mechanical compressors before their use in the manufacturing of sodium carbonate and/or bicarbonate.

Moreover, the inventors have observed that Tars, PAHs (Polycyclic Aromatic Hydrocarbons) and BTEX (compounds such as Benzene, Toluene, Ethylbenzene, and Xylene isomers) compounds increase sensitively in the limekiln gas when the volatile content of the biochar is above 50 wt% on dry base. The same regarding phenolic compounds. Said components are toxic and do not fit the requirements for producing food or pharmaceutical products, and induce costly gas treatment on residual gasses before released in the environment. They are detrimental to the operation of limekilns as part of them condense on colder parts of the gas circuits accumulating toxic compounds. Therefore, the biochar or charcoal should comprise at most 50 wt % preferably at most 35 wt. % of volatile matter in weight for their use in sodium carbonate or bicarbonate manufacturing.

Therefore the present invention relates to a method for the manufacture of sodium carbonate or sodium bicarbonate, wherein said method comprises a limestone calcining step in a limekiln to produce lime (CaO) and a gas comprising carbon dioxide (CO₂), using limestone and a carbonaceous combustible, characterized in that:
- the said carbonaceous combustible comprises biochar, and
- the biochar comprises at most 50 % by weight of volatile matter on a dry base.

In a preferred embodiment of the above invention, the biochar comprises at most 35 % or even more preferred at most 30% by weight of volatile matter on a dry base.

When the carbonaceous combustible fed in the limekiln comprises a mixture of biochar and other combustible such as: coke, coal or anthracite, it is also preferred that the overall carbonaceous combustible fed in the limekiln comprises at most 35% by weight of volatile matter on a dry base, or preferably at most 30 % or even more preferably at most 25% by weight of volatile matter on a dry base.

A too low volatile matter in the biochar used in the carbonaceous combustible, such as below 7% or below 5 or 4% by weight of volatile matter on a dry base, leads to :
- an overall decrease of biochar production yield of the quantity of produced biochar reported to the weight of the fresh biomass used;
and generates several problems:
- an increase of the fragility of the biochar solid, as the biochar becomes more porous when pyrolized at low volatile matter. This leads to generation of more fine solid particles when the biochar is handled and transported with trucks and railcars, and when the biochar is fed in limekilns. This also increases the risk of undesired inflammation in the process and increases the risk of explosion when handling the produced limekiln gas;
- a decrease of the thermal yield of the carbonaceous combustible as part of the fines particles of biochar will be swept out with the limekiln gas and then will not be burnt in the limekiln;
- an increase of pollution of produced limekiln gas which will comprise higher dust or fine particles concentration with the biochar fines. As limekiln gas scrubbers remove only part of dust of the produced limekiln gas, this induces a pollution of the produced sodium carbonate or bicarbonate which are white particles, with biochar particles that are dark brown or of black color. In addition, if limekiln gas is to be filtered, there is an increase of energy consumption to compensate the pressure drop of filters in compressors circuits;
- a decrease of thermal efficiency of the carbonaceous combustible when it is used in vertical shaft kiln or in rotary kiln.

Indeed, fine particles of biochar or smaller biochar lumps broken by the weight of the limestone load-weight, will burn more rapidly when entering the heated zone of the kiln. This will enlarge the height of the fired zone, and decrease the effectiveness of countercurrent process and heat recovery of said vertical kiln or said rotary kiln.

Such enlargement of the fired zone decreases the forefront zone and reduces the time of contact after the cold limestone is loaded in the kiln and progressively heated up by the hot combustion gases exiting the kiln in contact with the cool limestone, when exiting in a countercurrent way. Generally, the fire zone of limekilns where limestone is calcined into lime is at a temperature of about 850-1250°C. If said fire zone is enlarged in size (ie in volume of the kiln), the size of the end-zone where the entering fresh air is heated with the hot calcined lime, up to the fire zone, will be reduced also. So that the time of contact of the hot lime with the fresh air will be reduced: this will consequently also reduce the countercurrent heatexchange efficacy of said limekilns: the produced gas and produced lime exiting the kiln will be at higher temperature corresponding to a heat energy loss;
Other negative impacts of this fired zone enlargement may be cited:
- it increases the (spread) content of over burnt lime blocs (generally the smaller blocs) and of unburnt limestone blocs (in the heart of the bigger stones) in the produced lime exiting the kiln; and
- it reduces the CO₂ concentration of the gases exiting the kiln as it will represent less limestone (CaCOs) transformed into lime (CaO).

For all above reasons in the present invention, the biochar comprises generally at least 4%, preferably at least 5% by weight of volatile matter on a dry base. It is preferred that the biochar comprises at least 7% by weight of volatile matter on a dry base.

### Definitions

In the present descriptive specification, some terms are intended to have the following meanings.

The term `biochar' is intended to mean a carbonized (in general from a thermochemical reaction in an oxygen-limited environment) carbonaceous combustible or a charcoal, originated from biomass, such as a vegetal or from a marine origin. Example of such feedstock to be carbonized can be:
natural wood, waste wood, pruning, branches, by-products of fruit stones (such as olive stone, peach stone, walnut shell, hazelnut shell, almond shell, etc.), wood furniture wastes, wood waste in particular wood waste of class B (according to UNECE-FAO United Nations wood waste classification catalogue 2022), drinking water or waste water treatment plant muds, paper industry mud, lignocellulosic wastes, algae, phytoplankton, etc.....

The term `carbonaceous combustible' is intended to mean a combustible comprising carbon, which generates carbon dioxide (CO₂) when it is burnt with air or with oxygen.

In the present specification, the volatile matter content is measured according to ISO 562:2010 standard.

In the present specification, the fixed carbon content is measured according to ISO 17246 standard.

In the present specification, the moisture content is measured according to ISO 11722:2013 standard.

In the present specification, the ash content is measured according to ISO 1171:2010 standard.

In the present specification, the composition of the volatile matter in CH₄, H₂, and CO, is measured according to the operating mode described in example 1 by pyrolyze with nitrogen gas sweeping, following a heating profile of 20°C/ minutes up to 900°C and then a plateau at 900°C during 7 minutes (similar to ISO 562:2010 standard for total volatile matter determination).

In the present specification, the choice of an element from a group of elements also explicitly describes:
- the choice of two or the choice of several elements from the group,
- the choice of an element from a subgroup of elements consisting of the group of elements from which one or more elements have been removed.

In the present specification, the description of a range of values for a variable, defined by a bottom limit, or a top limit, or by a bottom limit and a top limit, also comprises the embodiments in which the variable is chosen, respectively, within the value range: excluding the bottom limit, or excluding the top limit, or excluding the bottom limit and the top limit.

The term "comprising" includes "consisting essentially of" and also "consisting of".

The use of "one" or "a(n)" in the singular also comprises the plural, and vice versa, unless otherwise indicated.

In the present specification, the terms "%", "% by weight", "wt%", "wt. %", "weight percentage", or "percentage by weight" can be used interchangeably, unless the "%" term is explicitly referred to an other physical unit (such as for instance "% in volume" or "vol. %", etc....

If the term "about" is used before a quantitative value, this corresponds to a variation of ± 10% of the nominal quantitative value, unless otherwise indicated.

In the present specification, the choice of an element from a group of elements also explicitly describes:
- the choice of two elements or the choice of several elements from the group,
- the choice of an element from a subgroup of elements consisting of the group of elements from which one or more elements have been removed.

### Detailed description of the invention

A first advantage of the present invention is to reduce the footprint of fossil carbon dioxide (CO₂) when manufacturing sodium carbonate or sodium bicarbonate.

A second advantage of the present invention is to enable the generation of a high CO₂ content in the generated limekiln gas, used in the sodium carbonate or sodium bicarbonate manufacturing process.

A third advantage of the present invention is to enable the generation of a limekiln gas with lower PAHs (Polycyclic Aromatic Hydrocarbons), BTEX (Benzene, Toluene, Ethylbenzene, and Xylene isomers) than the limekiln gas obtained with fossil carbonaceous fuels such as hard coal, anthracite, or metallurgical coke.

A fourth advantage of the present invention is to enable the generation of a limekiln gas with limited soot, and secondary decomposition products, such as: pyrolitic organics, terpens, furans, aldehydes, and carboxylic acids.

A fifth advantage of the present invention, is to limit the generation of colored compounds and molecules in the limekiln gas, avoiding the coloration of sodium carbonate or bicarbonate.

A sixth advantage of the present invention, linked to the third to fifth advantages above, is to generate a gas compatible with the manufacture of sodium carbonate or bicarbonate of food grade and/or of pharmaceutical grade.

A seventh advantage of the present invention is to enable a smooth operation of limekilns and CO₂ compressor sector when using biochar avoiding the polymerization and condensation of organics on cold surfaces that plug equipment and rotary compressors.

A eighth advantage of the present invention is to improve the security of limekilns operation and operators when using biochar, by avoiding to reach explosive concentrations of gasses such as: carbon monoxide (CO), methane (CH₄), and dihydrogen (H₂).

A ninth advantage of the present invention, when using biochar rather than fossil fuel such as coke and anthracite, is to reduce the concentration of SO₂ in the limekiln gas and of gypsum in the milk of lime. The latter plug the distiller sector equipment and related pipes reducing their operation time between cleaning operation steps when producing sodium carbonate or bicarbonate.

A tenth advantage of the present invention is to improve the limekiln operation with a limited spread of the fire zone in the limekiln when using said biochar.

An eleventh advantage of the present invention when using part or totally biochar in replacement of fossil carbonaceous combustible fed in limekilns is to reduce the insolubles comprising oxides of silicon, aluminum and/or iron in liquid effluents from ammonia distillation sector when manufacturing sodium carbonate. This leads also to a decrease of solid incrustation on surfaces of distillation equipment when producing sodium carbonate and using said biochar in replacement of fossil carbonaceous combustibles.

The present invention relates to a number of further embodiments of the process, which are detailed below:
Item 1. A method for the manufacture of sodium carbonate or sodium bicarbonate,
   wherein said method comprises a limestone calcining step in a limekiln to produce lime (CaO) and a gas comprising carbon dioxide (CO2),
   using limestone and a carbonaceous combustible,
   characterized in that:
      - the said carbonaceous combustible comprises biochar, and
      - the biochar comprises at most 50 % by weight of volatile matter on a dry base.
Item 2. The method of item 1 wherein the biochar comprises at most 35%, preferably at most 30% by weight of volatile matter on a dry base.
Item 3. The method of item 2 wherein the biochar comprises at most 17%, preferably at most 15% by weight of volatile matter on a dry base.
Item 4. The method of any of the preceding items wherein the biochar comprises at least 3%, preferably at least 3.5% by weight of volatile matter on a dry base.
Item 5. The method of any of the preceding items wherein the biochar comprises at least 5%, preferably at least 6% by weight of volatile matter on a dry base.
Item 6. The method of any of the preceding items wherein the biochar comprises at least 6% and at most 15% by weight of volatile matter on a dry base.
Item 7. The method of any of the preceding items wherein the biochar comprises at least 16% and at most 27% by weight of volatile matter on a dry base.
Item 8. The method of any of the preceding items wherein the biochar comprises at most 2 wt. % or at most 1.5 wt. % as H₂ in volatile matter reported to total weight of dried biochar.
Item 9. The method of any of the preceding items, wherein the carbonaceous combustible comprises at least 25%, or at least 35% by weight of biochar on a dry base.
Item 10. The method of any of the preceding items, wherein the carbonaceous combustible comprises at least 50%, or at least 65% by weight of biochar on a dry base.
Item 11. The method of any of the preceding items, wherein the carbonaceous combustible comprises, as complement of the biochar: coke, pet coke, lignite coke, anthracite, lignite, or coal, preferably the carbonaceous combustible comprises, as complement of the biochar: coke and/or anthracite.
Item 12. The method of any of the preceding items, wherein the carbonaceous combustible is devoid of fossil fuel such as: coke, pet coke, lignite coke, anthracite, lignite, or coal.
Item 13. The method of any of the preceding items, wherein the carbonaceous combustible comprises essentially or totally biochar.
Item 14. The method of any of the preceding items, wherein the carbonaceous combustible and/or the biochar is sprayed with water or wetted with water or rain, before being loaded or used in the limekiln.
Item 15. The method of any of the preceding items, wherein the carbonaceous combustible and/or the biochar is sprayed or wetted with at least 1 wt. % of water reported to the weight of the carbonaceous combustible and/ or the biochar, before being loaded or used in the limekiln.
Item 16. The method of any of the preceding items, wherein the carbonaceous combustible and/or the biochar is sprayed or wetted with at least 2 wt. % of water reported to the weight of the carbonaceous combustible and/ or the biochar, before being loaded or used in the limekiln.
Item 17. The method of any of the preceding items, wherein the carbonaceous combustible and/or the biochar is sprayed or wetted with at least 4 wt. % of water reported to the weight of the carbonaceous combustible and/ or the biochar before being loaded or used in the limekiln.
Item 18. The method of any of the preceding items, wherein the carbonaceous combustible and/or the biochar is sprayed or wetted with at most 40 wt. % of water reported to the weight of the carbonaceous combustible and/ or the biochar before being loaded or used in the limekiln.
Item 19. The method of any of the preceding items, wherein the carbonaceous combustible and/or the biochar is sprayed or wetted with at most 20 wt. % of water reported to the weight of the carbonaceous combustible and/ or the biochar before being loaded or used in the limekiln.
Item 20. The method of any of the preceding items, wherein the carbonaceous combustible and/or the biochar is sprayed or wetted with at most 10 wt. % of water reported to the weight of the carbonaceous combustible and/ or the biochar before being loaded or used in the limekiln.
Item 21. The method of any of the preceding items, wherein the biochar comprises at most 20%, preferably at most 10% by weight of water.
Item 22. The method of any of the preceding items, wherein the biochar is formed from lump pieces, and has a pieces size distribution wherein at most 20% in weight of the pieces are of size of less than 25 mm.
Item 23. The method of any of the preceding items, wherein the biochar is formed from lump pieces, and has a pieces size distribution wherein at most 20% in weight of the pieces are of size of more than 90 mm.
Item 24. The method of any of the preceding items, wherein the biochar is formed from lump pieces, and has a pieces size distribution wherein at most 20% in weight of the pieces are of size of more than 50 mm.
Item 25. The method of any of the preceding items, wherein the biochar is formed from biochar briquettes.
Item 26. The method of the preceding item, wherein the biochar briquettes comprise at least 2% and at most 25%, or advantageously at least 4% and at most 25% by weight of a binding agent on a dry base.
Item 27. The method of the preceding item, wherein the binding agent comprises or is an inorganic binder selected from: Aluminum oxide (Al2O3), Bentonite, Calcium carbonate, Calcium hydroxide, Calcium oxide, Cement, Clays, Dolomite, Gilsonite, Glass fibers, Gypsum, Kaolin, Lime, Magnesium oxide, Alkaline silicate such as Sodium silicate or Potassium silicate, Aluminum silicate, Calcium silicate, Magnesium silicate, Solid waste of Solvay ammonia process, a Mineral filler, and mixtures thereof.
Item 28. The method of items 20 or 21, wherein the binding agent comprises, or is, an organic binder selected from: Acrylonitrile-Butadiene-Styrene Copolymer, Aminopolymer (Aminoplasts), Acrylic resin, Asphalt, Bitumen, Bituminous coal, Carbohydrate, Coal tar, Citric acid, Dextrin, Epoxy resin, Fat, Flour, Glyceridic oil, Fluorosilicic acid, Guar gum, Lignin, Lignosulfonic acid, Melamine-Formaldehyde polymers, Methyl cellulose, Molasse, Paraffin, Phenolic resins, Phenolic-Formaldehyde resin, Polisiloxane, Polymer resin, Polycarbonate, Polycarboxylate, Polyethylene Terephthalate, Polyolefin, Polyethylene, Polypropylene, Polystyrene, Polystyrene Copolymers, Polyvinyl acetate, Polyvinyl alcohol, Recycled Plastics, Rosin, Starch, Pre-gelatinized Starch, Sugar, Thermoplastic, Urea-Formaldehyde resin, and mixtures thereof.
Item 29. The method of any item 26 to 28, wherein the briquette is formed with a biomass and a binding agent, and the binding agent is at least partially pyrolized to obtain the biochar briquette.
Item 30. The method of any preceding items, wherein the ash content of the biochar is at most 15%, preferably at most 11% by weight on a dry base, according to ISO1171 standard.
Item 31. The method of the preceding item, wherein the ash content of the biochar is at most 6%, preferably at most 4% by weight on a dry base, according to ISO1171 standard.
Item 32. The method of any preceding items, wherein the ash content of the biochar is at least 1%, or at least 1.5%, more preferably at least 2% by weight on a dry base, according to ISO1171 standard.
Item 33. The method of any preceding items, wherein the lower heating value (LHV) of the biochar is at least 10, or preferably at least 15 GJ/ ton, according to ISO1928:2009 standard.
Item 34. The method of the preceding item, wherein the lower heating value (LHV) of the biochar is at least 20, or at least 22 GJ/ ton, according to ISO1928:2009 standard.
Item 35. The method of the preceding item, wherein the lower heating value (LHV) of the biochar is at least 24, or at least 26 GJ/ ton, according to ISO1928:2009 standard.
Item 36. The method of any preceding items, wherein the biochar comprises at least 55%, preferably at least 70%, more preferably at least 80% by weight of fixed carbon according to ISO 17246:2010 standard.
Item 37. The method of the preceding item, wherein the biochar comprises at least 85%, preferably at least 87% by weight of fixed carbon according to ISO 17246:2010 standard.
Item 38. The method of the preceding item, wherein the biochar comprises at least 90%, preferably at least 92% by weight of fixed carbon according to ISO 17246:2010 standard.
Item39. The method of any preceding items, wherein the biochar at a `drop test' generates at most 2% or at most 1% of particles of less than 5 mm.
Item 40. The method of any preceding items, wherein the limekiln is a vertical shaft limekiln or a rotary limekiln.
Item 41. The method of any preceding items, wherein the limekiln is a vertical parallel flow regenerative kiln.
Item 42. The method of any preceding items, wherein the limekiln is heated with a burner mean burning the carbonaceous combustible comprising biochar.
Item 43. The method of any preceding items, wherein the manufacture of sodium carbonate or sodium bicarbonate is according to the Solvay ammonia process.
Item 44. The method of any preceding items 1 to 42, wherein the manufacture of sodium carbonate or sodium bicarbonate comprises a sodium carbonate monohydrate process or a sodium sesquicarbonate process, using trona or nahcolite minerals as raw material.

The following examples are given by way of non-limiting illustration of the present invention, and variations thereof that are readily accessible to a person skilled in the art.

### Examples

### Example 1

1.1 This example describes the volatile matter identification on different samples of carbonaceous combustible among metallurgical coke, hard coal anthracite, and biochar.

The operating mode to identify flammable gasses freed when heated at high temperature and able to provoke explosions is described infra.

Each sample of carbonaceous combustible such as biochar or charcoal, coke or anthracite is crushed and sieved between 250 µm and 500 µm. Then according the density of the powder about 5 to 10 g of crushed coke or anthracite, or 1g to 5 g of crushed biochar or charcoal is placed in a quartz tube in U-shape, and of 20 mm internal diameter and 25 mm outside diameter, to give a fixed bed of carbonaceous combustible of about 40 mm high. The target is to quantify the mass loss during a pyrolysis of the solid fuel following a heating profile of 20°C/ minutes up to 900°C and then a plateau at 900°C during 7 minutes (similar to ISO 562:2010 standard). 100 mL/ min of nitrogen (N₂) flows through the bed, and carries out the volatiles gas to a heated line and bubblers to identify and quantify said volatiles gasses.

Both, the temperature of the oven and the temperature of the sample (inside the bed) are recorded.

At the outlet of the reactor, pyrolysis gasses are conducted via a heated line (350°C) into two consecutive bubblers filled with iso-propanol and liquid nitrogen (N₂) (about 10mL in each bubbler) and kept at 0°C and -30 °C in Dewar recipients. The permanent gasses are collected in a sampling Tedlar bag connected directly at the exit of the 2^{nd} bubbler. The gas collected in the sampling bag is analyzed by micro gas chromatography mass spectrometer (µGC-MS) using a PPQ precolumn with a back-flush and a molecular sieve 5A for H₂, CH₄, and CO quantification. A preliminary drying of the sample is done placing the quartz-U-Tube reactor in the oven at 70°C and then set at a temperature of 110°C for 50 minutes to desorb the water. Then, the reactor is disconnected and weighted rapidly to give the mass of anhydrous solid fuel (based on the mass of the empty reactor).

The following table gives results of flammable gasses presenting an explosion risk freed when heating the different samples, in typical limekiln gas composition from sodium carbonate and bicarbonate plants:

**Table 1 - Composition of flammable gasses freed when heating carbonaceous combustible up to 900°C in non-oxidizing atmosphere.**

| Samples | Total Volatile Matter | Sum of dangerous gasses (CO + CH₄ + H₂) reported to carbonaceous combustible | H₂ equivalent content regarding explosion risk |
|---|---|---|---|
| | wt% | wt % | wt% |
| Biochar resinous wood 875°C | 17.2 | 8.6 | 1.70 |
| Charcoal A | 26.0 | 10.4 | 1.26 |
| Charcoal B | 16.8 | 9.6 | 1.52 |
| Charcoal C fines 015 mm | 9.0 | 5.1 | 0.85 |
| Charcoal C Lumps 20-40 mm | 8.3 | 4.1 | 1.10 |
| Charcoal D | 14.1 | 9.2 | 2.00 |
| Charcoal Lump Hardwood E | 21.2 | 8.4 | 1.27 |
| Charcoal Hardwood E briquette + native starch | 23.1 | 8.7 | 1.32 |
| Waste wood class B carbonised 650°C | 9.0 | 5.4 | 1.09 |
| Waste wood class B carbonised 850°C | 5.6 | 2.4 | 0.49 |
| Anthracite I | 3.4 | 1.0 | 0.62 |
| Anthracite J | 3.0 | 0.9 | 0.63 |

1.2 The analysis of 31 samples of different biochar of different origins, and 27 samples of anthracite or metallurgical coke of different origins, gave respectively a mean value in corresponding ash content of the carbonaceous combustible:
- a mean value of 4% Si (silicon) in biochar ashes and 41% Si (ten times more) in anthracite or coke samples ashes;
- a mean value of 2.2% Al (aluminum) content in biochar ashes and 26% Al (twelve times more) in anthracite or coke samples ashes;
- a mean value of 2.5% Fe (iron) content in biochar ashes and 18% Fe (seven times more) in anthracite or coke samples ashes;

Said elements (Si, Al, Fe) present as oxides when the limestone is burnt into lime, at high temperatures, generate cementations hydraulic binders in presence of calcium hydroxides from the milk of lime when used in the ammonia distillation sector. They also increase said components in the solid residues in the effluents of the distillation sector. The use of biochar in replacement of part, or totally, of fossil carbonaceous combustible, decreases incrustations on the surface of distillation equipment. It enables also to reduce amount of solid residues in liquid effluents from the distillation sector.

1.3 On above combustible samples, a mechanical brittleness and fragility characterization was made with the following `drop test' described infra, to quantify the generation of fine particles when transporting and handling said biochar material in lumps or briquettes, compared to typical fossil solid carbonaceous combustible (such as metallurgical coke, anthracite, hard coal, etc...).

The following `drop test' quantifies the average quantity of "fine particles" (< 5 mm) that will result from dropping the combustible in shape of lumps or briquettes, into a limekiln when falling on its own weight from a height of 6 meters. The quantity of fines generated under 5 mm is weighed after sieving of the tested sample.

High amount of particles less than 5 mm means that the combustible is fragile and is not recommended to be handled, transported and loaded in a limekiln.

### Test description of the 'drop test':

A suspended flexible pipe, 6 meters long, and of 20 cm internal diameter is placed vertically, dipping into a bucket to receive the falling sample to be characterized. The fallen sample, and the fines generated by the fall collected in the bucket are sieved on a sieve of 5 mm mesh. The resulting quantity of broken sample and fines generated, sieved under 5 mm, are weighed, and reported to the initial weight of the sample before the fall and expressed in weight percentage.

The measure is done on 3 different samples of the combustible to be characterized and the mean value is noted with the deviation. In case of heterogeneous combustible the number of characterized samples is enlarged to 10 samples.

On the above carbonaceous combustibles samples, said `drop test' showed that :
- presently used anthracite or metallurgical coke have values of drop test which are comprised between 0.06% to 0.90% with typical mean values of 0.40 wt. %;
- biochar in lumps or briquettes are generally more fragile and have a spread much wider with values of drop test which are comprised between 0.20% to several weight percents. Typical mean values for biochar samples considered as compatible to be loaded in limekilns are 0.30 to 0.80%. Values above 1%, particularly above 2% should be avoided as said combustibles will have a propensity to break easily during handling and during limekilns loading.

### Example 2

In a vertical shaft limekiln from a soda ash plant producing sodium carbonate and bicarbonate, as described in Ullmann's Encyclopedia of Industrial Chemistry ("Sodium carbonate" chapter, 2002 edition, Wiley-VCH Verlag GmbH & Co.), two test runs of 3 days each were operated to stabilize the operating conditions of the limekiln:
- one with a carbonaceous combustible consisting of 100% fossil fuel made of anthracite having a low volatile matter of 3.4% in weight and comprising 8.4% ashes content,
- a second one the carbonaceous combustible was a mixture comprising 30 wt. % of same anthracite as first run and 70 wt% of wood charcoal comprising 6.3 wt% volatile matter and 2.4% ash content.

The limekiln gas was analyzed in CO₂, CO, H₂ content during the two runs of 3 days, and also in PAHs (Polycyclic Aromatic Hydrocarbons) and BTEX (Benzene, Toluene, Ethylbenzene, and Xylene isomers).

The limekiln gas obtained during the second run was equivalent or close to the first run, and gave good results in thermal efficiency of the limekiln. Surprisingly the components consisting of PAHs (Polycyclic Aromatic Hydrocarbons) and BTEX (Benzene, Toluene, Ethylbenzene, and Xylene isomers) were decreased by a factor 2 to 6 on test run 2 compared to test run 1.

The charcoal (run test 2) generated much more dust of carbonized matter than the anthracite (run test 1) when handled and loaded in the limekiln.

The spray of 3 wt.% water on the wood charcoal reduced sensitively the dust generated during handling and loading of the combustible in the lime kiln, and also the charcoal dust content in the generated limekiln gas.

The produced sodium carbonate and bicarbonate during the second test run was conform to commercial specifications.

The produced milk of lime on test run 2, comprises a sensitive decrease of silicon oxide and aluminum oxide, compared to test run 1, reducing the final solid residues in said components in distillation outlet of the sodium carbonate production and also reducing solid incrustation comprising aluminum and iron siliceous oxides on the surface of equipment of the ammonia distillation sector.

### Example 3

In a similar manner as in Example 2, in same vertical shaft limekiln, 2 further tests are run with two carbonaceous combustible where the same fossil combustible made of anthracite is gradually replaced with 30 wt% of 2 torrefied biochars having respectively run test 3 : 55 wt% volatile matter and run test 4 : 35 wt% volatile matter.

The behavior in dusting in test run 3 and 4, regarding handling and loading the combustible mixture in the limekiln is better than with charcoal at 6 wt% volatile matter.

Though regarding the test run 3 with the torrefied biomass at 55% volatile matter, the amounts of inflammable gasses in the limekiln gas, such as CO, increase sensitively, the same regarding acidic organic gasses, and the CO₂ content of the limekiln gas decreases at 34 vol. % on dry gas which is not acceptable regarding absorption yield in the carbonation columns.

Regarding test run 4, where 30% of the anthracite is replaced with a torrefied biochar at about 35 wt.% volatile, the reduction of the CO₂ content in limekiln gas is reasonable: decreasing to about 37.5 vol. % on dry gas, which is manageable in the carbonation sector, and the produced sodium carbonate and bicarbonate have a whiteness compatible with technical specifications.

Should the disclosure of any patents, patent applications, and publications, cited herein in the description, conflict with the description of the present application to the extent that it may render a term unclear, the present description shall take precedence.

## Claims

1. A method for the manufacture of sodium carbonate or sodium bicarbonate,
wherein said method comprises a limestone calcining step in a limekiln to produce lime (CaO) and a gas comprising carbon dioxide (CO₂),
using limestone and a carbonaceous combustible,
**characterized in that**:
- the said carbonaceous combustible comprises biochar, and
- the biochar comprises at most 50 % by weight of volatile matter on a dry base.

2. The method of claim 1 wherein the biochar comprises at most 35% by weight of volatile matter on a dry base.

3. The method of claim 2 wherein the carbonaceous combustible comprises at most 30% of volatile matter on a dry base.

4. The method of any one of the preceding claims, wherein the carbonaceous combustible comprises at least 25%, or at least 35% by weight of biochar on a dry base.

5. The method of any one of the preceding claims, wherein the carbonaceous combustible comprises, as complement of the biochar: coke and/or anthracite.

6. The method of any one of the preceding claims, wherein the carbonaceous combustible is devoid of fossil fuel such as: coke, pet coke, lignite coke, anthracite, lignite, or coal.

7. The method of any one of the preceding claims, wherein the carbonaceous combustible comprises essentially or totally biochar.

8. The method of any one of the preceding claims, wherein the biochar is formed from lump pieces, and has a pieces size distribution wherein at most 20% in weight of the pieces are of size of less than 25 mm.

9. The method of any one of the preceding claims, wherein the biochar is formed from lump pieces, and has a pieces size distribution wherein at most 20% in weight of the pieces are of size of more than 90 mm.

10. The method of any one of the preceding claims, wherein the biochar is formed from biochar briquettes.

11. The method of the preceding claim, wherein the biochar briquettes comprise at least 4% and at most 25% by weight of a binding agent on a dry base.

12. The method of the preceding claim, wherein the binding agent comprises or is an inorganic binder selected from: Aluminum oxide (Al₂O₃), Bentonite, Calcium carbonate, Calcium hydroxide, Calcium oxide, Cement, Clays, Dolomite, Gilsonite, Glass fibers, Gypsum, Kaolin, Lime, Magnesium oxide, Alkaline silicate such as Sodium silicate or Potassium silicate, Aluminum silicate, Calcium silicate, Magnesium silicate, Solid waste of Solvay ammonia process, a Mineral filler, and mixtures thereof.

13. The method of claims 11 or 12, wherein the binding agent comprises or is an organic binder selected from: Acrylonitrile-Butadiene-Styrene Copolymer, Aminopolymer (Aminoplasts), Acrylic resin, Asphalt, Bitumen, Bituminous coal, Carbohydrate, Coal tar, Citric acid, Dextrin, Epoxy resin, Fat, Flour, Glyceridic oil, Fluorosilicic acid, Guar gum, Lignin, Lignosulfonic acid, Melamine-Formaldehyde polymers, Methyl cellulose, Molasse, Paraffin, Phenolic resins, Phenolic-Formaldehyde resin, Polisiloxane, Polymer resin, Polycarbonate, Polycarboxylate, Polyethylene Terephthalate, Polyolefin, Polyethylene, Polypropylene, Polystyrene, Polystyrene Copolymers, Polyvinyl acetate, Polyvinyl alcohol, Recycled Plastics, Rosin, Starch, Pre-gelatinized Starch, Sugar, Thermoplastic, Urea-Formaldehyde resin, and mixtures thereof.

14. The method of any one of the preceding claims, wherein the biochar at a drop test of 6 meters high generates at most 2% or at most 1% of particles of less than 5 mm.

15. The method of any one of the preceding claims, wherein the ash content of the biochar is at most 11%, preferably at most 6% by weight on a dry base, according to ISO1171 standard.
